# EUROPEAN PATENT SPECIFICATION

(11) **EP 1 085 201 B1**
(45) Date of publication and mention of the grant of the patent: **19.11.2003**
(21) Application number: 00119983.5
(22) Date of filing: 14.09.2000
(51) Int. Cl.: F02M 35/12

(54) **Tuned active helmholtz resonator with forced response**
Aktiver abgestimmter Helmholtz Resonator mit gezwungener Response
Résonateur Helmholtz actif, ajusté et à réponse forcée

(30) Priority: 16.09.1999 US 154391 P
(43) Date of publication of application: 21.03.2001
(73) Proprietor: Siemens VDO Automotive Inc., Chatham, Ontario N7M 5M7 (CA)
(72) Inventor: McLean, Ian R., Chatham, Ontario N7M 3V6 (CA)
(74) Representative: Allen, Derek

(56) References cited:
- EP-A- 0 586 831
- US-A- 5 229 556
- US-A- 5 446 790
- US-A- 5 571 239
- PATENT ABSTRACTS OF JAPAN vol. 016, no. 553 (M-1339), 24 November 1992 (1992-11-24) & JP 04 209961 A (TOYOTA MOTOR CORP), 31 July 1992 (1992-07-31)
- PATENT ABSTRACTS OF JAPAN vol. 1996, no. 11, 29 November 1996 (1996-11-29) & JP 08 185189 A (TSUCHIYA MFG CO LTD), 16 July 1996 (1996-07-16)

## Description

### BACKGROUND OF THE INVENTION

This invention relates to a noise attenuation device for an air induction system, more particularly, the invention relates to a Helmholtz resonator for producing a forced response.

Internal combustion engines produce undesirable induction noise which adversely affects the output torque and volumetric efficiency of the engine. The induction noise produced by the engine depends on the particular engine configuration and is affected by such factors as the number of cylinders, the volume and shape of the intake manifold plenum and intake runners, and other induction system parameters. The induction noise is caused by a pressure wave that travels away from the combustion chamber toward the inlet of the air induction system. The induction noise may be reduced and the engine performance improved by producing a wave traveling in the direction of the combustion chamber 180° out of phase of the noise wave. To this end, noise attenuation devices have been developed.

A Helmholtz resonator is one widely used noise attenuation device. The Helmholtz resonator produces a pressure wave that counteracts primary engine order noise waves, which have the greatest negative impact on engine performance. Helmholtz resonators typically provide a passive response targeted at a particular band width of noise. Because the Helmholtz resonator typically provides a passive response, losses occur which decrease the overall effectiveness of the resonator by producing a pressure wave having a narrower bandwidth and smaller amplitude than desired. Variable Helmholtz resonators have been developed, which vary the volume of the resonator to vary the band width at which the resonator attenuates noise. However, these variable resonators do not address the passive losses associated with the Helmholtz resonator. Accordingly, it is desirable to widen the band width of a Helmholtz resonator to further attenuate noise and increase the performance of the engine.

US Patent US-A-5,229,556 describes a system for use in the cancellation of noise emitted from an exhaust system of a vehicle.

US Patent US-A-5,571,239 describes a noise control apparatus for an internal combustion engine.

### SUMMARY OF THE INVENTION AND ADVANTAGES

The present invention provides a Helmholtz resonator including a chamber at least partially defining a cavity. The chamber has a neck which defines a passage that is in fluid communication with the cavity. The chamber and the neck produce a passive response to a sound wave produced by the internal combustion engine. The sound wave negatively effects engine performance. An active resonator is disposed within the chamber. The active resonator produces a forced response for supplementing the passive response and increasing the band width of the noise attenuating pressure wave.

The Helmholtz resonator is in fluid communication with a portion of an air induction system that defines a passageway that carries the sound wave. A driver is connected to the active resonator, which is preferably a loud speaker, to drive the loud speaker and produce the forced response. The driver utilizes a signal source, being the engine speed signal, to synchronize the forced response with the engine speed. A phase compensator synchronizes the forced response with the sound wave, and an amplifier amplifies the signal to drive the loud speaker, which is preferably a woofer.

Accordingly, the present invention increases the band width of the passive response of the Helmholtz resonator to more effectively attenuate noise and increase engine performance.

### BRIEF DESCRIPTION OF THE DRAWINGS

Other advantages of the present invention can be understood by reference to the following detailed description when considered in connection with the accompanying drawings wherein:
Figure 1 is a schematic view of an internal combustion engine and induction system of the present invention;
Figure 2 is a perspective view of the Helmholtz resonator of the present invention; and
Figure 3 is a graphical view of pressure waves.

### DETAILED DESCRIPTION OF THE PREFERRED EMBODIMENT

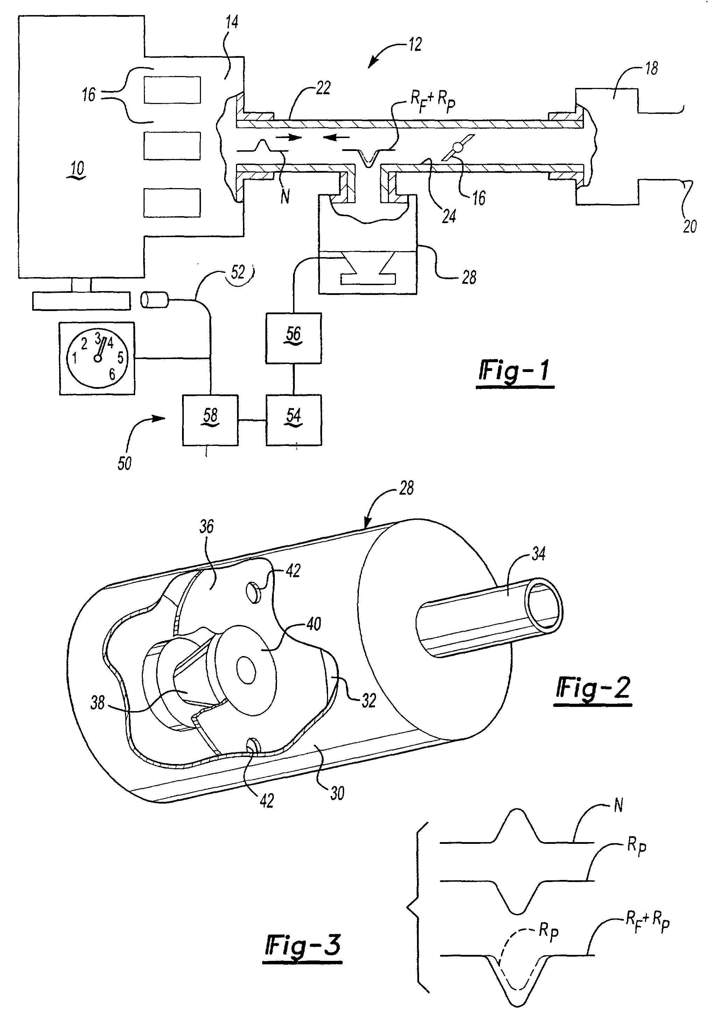

An internal combustion engine 10 is shown in Figure 1. An air induction system 12 provides air to the engine 10 for mixture with fuel. The air/fuel mixture is burned in a combustion chamber. Air is provided from the atmosphere through an air intake 20 that feeds air through a filter box 18. The air travels along passageway 24 through a throttle body 16 which controls the amount of air that travels through the passageway 24 to the engine 10. The air is fed to an intake manifold 14 which then distributes the air to the combustion chambers through runners 15. During the combustion process noise pressure waves N are produced in the induction system 12 which reflect back into the combustion chambers and negatively effect engine performance.

A Helmholtz resonator 28 is shown in fluid connection with the passageway 24 to produce noise attenuating pressure waves which at least partially cancel the noise pressure waves N. Primary order engine noise, or the most undesirable engine noise, is related to the speed of the engine. Helmholtz resonators are designed to attenuate noise at the primary order. The frequency at which the primary order engine noise occurs is: number of cylinders/2 x engine speed/60.

The Helmholtz resonator which is shown in Figure 2 includes a chamber 30 defining a cavity 32. A neck 34, which is shown as a tubular structure, extends from the chamber 30 and is in fluid communication with the cavity 32. The volume defined by the cavity 32 and the area of the neck 34 largely effect the band width of the noise attenuating frequency. The Helmholtz resonator 28 produces a passive response Rₚ that is approximately 180° out of phase from the noise wave N, shown in Figure 3. The passive response Rₚ has a bandwidth narrower and an amplitude smaller than desired.

The resonator 28 is shown arranged between the throttle body 16 and the intake manifold 14. However, it is to be understood that the resonator 28 may be arranged anywhere along the induction system 12. Preferably, the resonator 28 is arranged between the throttle body 16 and the intake manifold 14 because the largest portion of the noise pressure wave is reflected from the throttle body 16 back to the intake manifold 14. With the resonator 28 arranged as shown in Figure 1, a larger portion of the noise pressure wave may be attenuated by the resonator 28.

The present invention increases the band width of the resonator 28 by producing a forced response R_{f} shown in Figure 3. The forced response supplements the passive response Rₚ and together provide a wider band width and higher amplitude than the passive response from the Helmholtz resonator 28. As a result, a larger portion of the noise pressure wave may be attenuated. To this end, the present invention utilizes a active resonator, preferably a loud speaker 38, to produce the forced response. The chamber 30 includes a flange 36 to which the loud speaker 38 is attached. The flange 36 has an opening within which the loud speaker diaphragm 40 is disposed. The loud speaker 38 is driven by a driver 50 that drives the diaphragm 40 to produce a pressure wave that supplements the passive response pressure wave Rₚ. That is, the forced response R_{f} is in phase with the passive response Rₚ. The flange 36 includes pressure equalization ports 42 that equalizes the pressure on either side of the flange 36 to permit consistent operation of the resonator 28 of the present invention in various altitudes and changing atmospheric pressures. The equalization ports 42 are small enough to prevent pressure waves from exiting the cavity 32 through the equalization ports 42 so that the noise attenuating and pressure wave will not escape but will be directed to the noise wave. Preferably the pressure equalization ports 42 are about 1/8 inch in diameter.

Since the Helmholtz resonator 28 is designed to attenuate noise produced at the primary engine order, the driver 50 preferably includes a signal source 52 that senses the speed of the engine. Such signals are commonly produced by proximeters that read notches on a timing gear. The speed signal is used by an ECU 58 for devices such as the tachometer and engine control. The signal source 52 is sent to a phase compensator 54 that adjusts the sinusoidal output from the signal source 52 so that it is approximately 180° out of phase with the noise pressure wave. The phase compensator 54 adjusts for such parameters as the speaker response, the volume response of the Helmholtz resonator, and the neck response of the Helmholtz resonator. These parameters may be determined through experimentation during the engine development process. An audio amplifier 56 amplifies the signal from the phase compensator 54 which is typically a low voltage signal. The signal from the audio amplifier 56 drives the loud speaker 38 to produce the forced response. The forced response R_{f} and passive response Rₚ, which are of wider band width and greater amplitude, are radiated back to the engine 10 to increase the engine performance.

While a branch Helmholtz resonator is shown it is to be understood that the present invention may also be used with an inline Helmholtz resonator. The invention has been described in an illustrative manner, and it is to be understood that the terminology that has been used is intended to be in the nature of words of description rather than of limitation. Obviously, many modifications and variations of the present invention are possible in light of the above teachings. It is, therefore, to be understood that within the scope of the appended claims the invention may be practiced otherwise than as specifically described.

## Claims

1. An induction noise attenuation system for a combustion engine comprising:
a portion of an air induction system (12) defining a passageway carrying a sound wave (24);
a Helmholtz resonator (28) having a chamber (30) at least partially defining a cavity (32) and a neck (34) extending from said chamber (30) and fluidly connecting said portion of said air induction system (12) and said cavity (32), said chamber (30) and said neck (34) producing a passive response to said sound wave;
an active resonator (38) disposed within said chamber (30); and
a driver (50) connected to said active resonator (38) producing a signal for driving said active resonator (38) and producing a forced response (R_{f}) for supplementing said passive response (Rₚ), wherein said driver (50) includes a signal source (52) that detects a speed of the combustion engine for synchronizing said forced response (R_{f}) relative to said speed, **characterised in that** the forced response is only dependent on engine speed.

2. The system according to claim 1, wherein said signal source (52) is engine RPM.

3. The system according to claims 1 or 2, wherein said driver (50) includes a phase compensator (54) for synchronizing said forced response (R_{f}) approximately 180° out of phase with said sound wave.

4. The system according to claim 1, wherein said driver (50) includes an amplifier (56) for amplifying a signal from said signal source (52).

5. The system according to claim 1, wherein said passageway (24) is arranged between an intake manifold ( 14) and a throttle body (16).

6. The system according to claim 1, wherein said active resonator is a loudspeaker (38).

7. The system according to claim 1 wherein said neck (34) is a tubular structure extending from said chamber (30).

8. The system according to claim 6 wherein said loudspeaker (38) is a woofer.

9. The system according to claim 1 wherein said chamber (30) includes a flange (36) with said loudspeaker (38) supported thereon, and said loudspeaker (38) having a diaphragm (40) disposed within an opening in said flange for producing said forced response (R_{f}).

10. The system according to claim 9 wherein said flange (36) includes at least one pressure equalization port (42) there through in fluid communication with said cavity (32).

11. The system according to claim 10 wherein said flange (36) is arranged opposite said neck (34).

12. A method of attenuating noise in an induction system comprising:
a) sensing an engine speed;
b) producing a phase compensated engine speed signal;
c) driving a loudspeaker (38) with a phase compensated engine speed signal (56); and
d) propagating a sound wave with the loudspeaker (38) to attenuate the noise in the induction system.
e) amplifying the engine speed signal; and
f) propagating a passive sound wave with a Helmholtz resonator, wherein step d) supplements the passive sound wave.

13. A resonator arrangement comprising the combined Helmholtz and active resonators of claims 1 to 11.

## Patentansprüche

1. Ansauggeräuschdämpfungssystem für einen Verbrennungsmotor, welches umfasst:
einen Abschnitt eines Lufteinlasssystems (12), der einen Durchgang (24) definiert, in dem sich eine Schallwelle fortpflanzt;
einen Helmholtz-Resonator (28), der eine Kammer (30), die wenigstens teilweise einen Hohlraum (32) definiert, und einen Hals (34), der sich von der besagten Kammer (30) aus erstreckt und über den der besagte Abschnitt des besagten Lufteinlasssystems (12) und der besagte Hohlraum (32) miteinander kommunizieren, umfasst, wobei die besagte Kammer (30) und der besagte Hals (34) eine passive Reaktion auf die besagte Schallwelle erzeugen;
einen aktiven Resonator (38), der in der besagten Kammer (30) angeordnet ist; und
einen mit dem besagten aktiven Resonator (38) verbundenen Treiber (50), der ein Signal erzeugt, um den besagten aktiven Resonator (38) anzusteuern und eine erzwungene Reaktion (R_{f}) als Ergänzung zu der besagten passiven Reaktion (Rₚ) zu erzeugen, wobei der besagte Treiber (50) eine Signalquelle (52) umfasst, welche eine Drehzahl des Verbrennungsmotors erkennt, um die besagte erzwungene Reaktion (R_{f}) bezüglich der besagten Drehzahl zu synchronisieren, **dadurch gekennzeichnet, dass** die erzwungene Reaktion nur von der Motordrehzahl abhängig ist.

2. System nach Anspruch 1, wobei die besagte Signalquelle (52) die Motordrehzahl ist.

3. System nach Anspruch 1 oder 2, wobei der besagte Treiber (50) einen Phasenentzerrer (54) umfasst, um die besagte erzwungene Reaktion (R_{f}) so zu synchronisieren, dass sie bezüglich der besagten Schallwelle um ungefähr 180° phasenverschoben ist.

4. System nach Anspruch 1, wobei der besagte Treiber (50) einen Verstärker (56) zur Verstärkung eines Signals von der besagten Signalquelle (52) umfasst.

5. System nach Anspruch 1, wobei der besagte Durchgang (24) zwischen einem Ansaugkrümmer (14) und einem Drosselgehäuse (16) angeordnet ist.

6. System nach Anspruch 1, wobei der besagte aktive Resonator ein Lautsprecher (38) ist.

7. System nach Anspruch 1, wobei der besagte Hals (34) eine rohrförmige Konstruktion ist, die sich von der besagten Kammer (30) aus erstreckt.

8. System nach Anspruch 6, wobei der besagte Lautsprecher (38) ein Tieftonlautsprecher ist.

9. System nach Anspruch 1, wobei die besagte Kammer (30) einen Flansch (36) umfasst, an dem der besagte Lautsprecher (38) befestigt ist, und wobei der besagte Lautsprecher (38) eine in einer Öffnung in dem besagten Flansch angeordnete Membran (40) zur Erzeugung der besagten erzwungenen Reaktion (R_{f}) aufweist.

10. System nach Anspruch 9, wobei der besagte Flansch (36) wenigstens eine durch ihn hindurchführende Druckausgleichöffnung (42) umfasst, die mit dem besagten Hohlraum (32) kommuniziert.

11. System nach Anspruch 10, wobei der besagte Flansch (36) gegenüber dem besagten Hals (34) angeordnet ist.

12. Verfahren zur Geräuschdämpfung in einem Einlasssystem, welches umfasst:
a) das Aufnehmen einer Motordrehzahl;
b) das Erzeugen eines phasenkompensierten Motordrehzahlsignals;
c) das Ansteuern eines Lautsprechers (38) mit einem phasenkompensierten Motordrehzahlsignal (56);
d) das Aussenden einer Schallwelle mit dem Lautsprecher (38), um das Geräusch im Einlasssystem zu dämpfen;
e) das Verstärken des Motordrehzahlsignals; und
f) das Aussenden einer passiven Schallwelle mit einem Helmholtz-Resonator, wobei der Schritt d) die passive Schallwelle ergänzt.

13. Resonator-Anordnung, welche die Kombination von Helmholtz-Resonator und aktivem Resonator der Ansprüche 1 bis 11 umfasst.

## Revendications

1. Système d'atténuation du bruit d'admission pour un moteur à combustion comprenant :
une partie d'un système d'admission d'air (12), définissant un passage porteur d'une onde sonore (24) ;
un résonateur de Helmhotz (28), doté d'une chambre (30) définissant, au moins partiellement, une cavité (32) et d'un col (34), dépassant de ladite chambre (30) et raccordant, pour des fluides, ladite partie dudit système d'admission d'air (12) et ladite cavité (32), ladite chambre (30) et ledit col (34) produisant une réponse passive à ladite onde sonore ;
un résonateur actif (38), disposé dans ladite chambre (30) ; et
un dispositif de commande (50) relié audit résonateur (38), produisant un signal électrique pour exciter ledit résonateur actif (38) et produisant une réponse forcée (R_{f}), pour augmenter ladite réponse passive (Rₚ), dans lequel ledit dispositif de commande (50) contient une source de signaux (52), qui détecte une vitesse du moteur à combustion pour synchroniser ladite réponse forcée (R_{f}) par rapport à ladite vitesse, **caractérisé en ce que** la réponse forcée ne dépend que de la vitesse du moteur.

2. Système selon la revendication 1, dans lequel ladite source de signaux (52) est la rotation du moteur.

3. Système selon la revendication 1 ou 2, dans lequel ledit dispositif de commande (50) contient un compensateur de phases (54), permettant de synchroniser ladite réponse forcée (R_{f}) approximativement à 180° de déphasage avec ladite onde sonore.

4. Système selon la revendication 1, dans lequel ledit circuit d'attaque (50) contient un amplificateur (56) permettant d'amplifier un signal à partir de ladite source de signaux (52).

5. Système selon la revendication 1, dans lequel ledit passage (24) se trouve entre un collecteur d'admission (14) et un de vanne papillon (16).

6. Système selon la revendication 1, dans lequel ledit résonateur actif est un haut-parleur (38).

7. Système selon la revendication 1, dans lequel ledit collet (34) est une structure tubulaire qui dépasse de ladite chambre (30).

8. Système selon la revendication 6, dans lequel ledit haut-parleur (38) est un haut-parleur de sons graves.

9. Système selon la revendication 1, dans lequel ladite chambre (30) contient un flasque (36) sur lequel se place ledit haut-parleur (38) et où ledit haut-parleur (38) est doté d'une membrane (40) se trouvant dans une ouverture située dans ledit flasque, pour produire ladite réponse forcée (R_{f}).

10. Système selon la revendication 9, ledit flasque (36) contient au moins un orifice (42) de correction de pression, à travers lequel il y a une communication pour fluides avec ladite cavité (32).

11. Système selon la revendication 10, dans lequel ledit flasque (36) se trouve à l'opposé dudit col (34).

12. Procédé d'atténuation de bruit dans un système d'admission comprenant :
a) la détection d'une vitesse de moteur ;
b) la production d'un signal de vitesse de moteur à phase compensée ;
c) l'excitation d'un haut-parleur (38) par un signal de vitesse de moteur à phase compensée (56) ;
d) la propagation d'une onde sonore grâce au haut-parleur (38), pour atténuer le bruit dans le système d'admission ;
e) l'amplification du signal de vitesse de moteur ; et
f) la propagation d'une onde sonore passive grâce à un résonateur de Helmhotz, dans lequel l'étape d) augmente l'onde sonore passive.

13. Arrangement de résonateurs comprenant la combinaison du résonateur de Helmhotz et du résonateur actif des revendications 1 à 11.
